# EUROPÄISCHE PATENTSCHRIFT

(11) **EP 0 524 585 B1**
(45) Veröffentlichungstag und Bekanntmachung des Hinweises auf die Patenterteilung: **26.03.1997**
(21) Anmeldenummer: 92112386.5
(22) Anmeldetag: 20.07.1992
(51) Int. Cl.: C08K 5/32, C08L 27/18, C08J 3/03, D06M 15/256

(54) **Konzentrierte, wässrige Dispersionen von Tetrafluorethylen-Polymeren, Verfahren zu deren Herstellung und deren Verwendung**
Concentrated aqueous dispersions of tetrafluoroethylene-polymers, process for making same and their use
Dispersions aqueuses concentrées de polymers de tétrafluoréthylène, procédé de leur préparation et leur utilisation

(30) Priorität: 20.07.1991 DE 4124134
(43) Veröffentlichungstag der Anmeldung: 27.01.1993
(73) Patentinhaber: Dyneon GmbH, 84504 Burgkirchen (DE)
(72) Erfinder: Stahl, Karlheinz, Dr., W-6238 Hofheim am Taunus (DE); Neumann, Wolfgang, W-8261 Kraiburg (DE); Seitz, Hubert, Dr., W-8269 Burgkirchen (DE)

(56) Entgegenhaltungen:
- EP-A- 229 340
- EP-A- 0 193 963
- EP-A- 0 471 416
- FR-A- 2 125 752
- GB-A- 642 025

## Beschreibung

Die Erfindung betrifft konzentrierte, wäßrige, kolloidale Dispersionen von Tetrafluorethylen-Polymeren mit einem Polymerfeststoffgehalt von 25 bis 70 Gew.-% und mit einem Aminoxid als Dispersionsstabilisator sowie ein Verfahren zu deren Herstellung und deren Verwendung.

Wäßrige, kolloidale Dispersionen von Fluorpolymeren werden in großem Umfang für die Beschichtung und Tränkung von Substraten der verschiedensten Art verwendet. Direkt aus dem Polymerisationsprozeß erhaltene wäßrige, kolloidale Dispersionen sind jedoch für diesen Zweck wenig geeignet, da die Homo- oder Copolymerisationsverfahren für fluorhaltige Monomere ohne übermäßige Koagulatbildung meist nur bis zu einem Feststoffgehalt an Polymerisat im Bereich von höchstens 30 Gew.-% geführt werden können. Beschichtungen mit solchen Dispersionen sind jedoch unökonomisch und wenig befriedigend, da nicht nur eine übermäßige Menge an Wasser nach dem Beschichtungsvorgang verdampft werden muß, sondern auch die Schichtdicke und die Filmbildungseigenschaften den gestellten Anforderungen nicht genügen. Es ist daher üblich und dem Fachmann wohlbekannt, solche Dispersionen einem Aufkonzentrierungsverfahren zu unterwerfen, das den Feststoffgehalt auf Werte von bis zu 70 Gew.-% erhöht. Solche bekannten Aufkonzentrierungsverfahren sind insbesondere schonendes Eindampfen im Vakuum (US-A 3 316 201), Aufkonzentrieren durch Elektrodekantation (GB-A 642 025) oder durch Ultrafiltration (US-A 4 369 266). Bei diesen Verfahren ist es üblich, einen anionischen, nichtionischen oder auch kationischen Dispersionsstabilisator zuzusetzen, der die Koagulation des kolloidal verteilten Fluorpolymeren verhindern soll. Besonders häufig werden für solche Zwecke in Handelsprodukten alkoxylierte Alkylphenole, aber auch Alkalilaurylsulfat eingesetzt (EP-A-193963). Solche Dispersionsstabilisatoren, die vor oder während des Aufkonzentrierungsprozesses hinzugegeben werden, verbleiben in der Dispersion und sollen insbesondere auch die Stabilität bei Lagerung und Transport zum Einsatzort der Dispersion gewährleisten. Die Anwesenheit solcher Dispersionsstabilisatoren bei Beschichtungsprozessen, wie sie mit konzentrierten, wäßrigen Fluorpolymeren-Dispersionen durchgeführt werden, bringt jedoch auch Nachteile mit sich. Vor allem bei solchen Tetrafluorethylen-Polymeren, die verhältnismäßig niedrige Einbrenntemperaturen erfordern und daher zur Gewebebeschichtung besonders geeignet sind, wird beobachtet, daß die erhaltenen Überzüge nach dem Einbrennen beträchtliche Verfärbungen aufweisen und die darin verbliebenen Anteile an Dispersionsstabilisatoren zum "Ausschwitzen" neigen, was eine klebrige Oberfläche des Überzugs hervorruft und dessen Antiadhäsivität und Anschmutzverhalten sehr nachteilig beeinflußt. Dies gilt insbesondere auch beim Imprägnieren von Garnen mit Polytetrafluorethylen oder mit Copolymeren des Tetrafluorethylens, da bei diesem Verfahren üblicherweise nur eine Trocknung bei Temperaturen bis 150 °C (oder bei höheren Temperaturen, aber sehr kurzen Verweilzeiten) erfolgt. Dabei verbleiben die bisher üblichen Dispersionsstabilisatoren in vollem oder nahezu vollem Ausmaß in der Imprägnierung, was wegen der erwähnten Nachteile außerordentlich unerwünscht ist. Stellt man beispielsweise aus solchen imprägnierten Garnen Stopfbüchsen, Packungen oder andere Dichtungen her, die in Kontakt mit Flüssigkeiten kommen, so können diese durch die genannten Dispersionsstabilisatoren verunreinigt werden.

Aber auch bei Tetrafluorethylen-Polymeren mit hohen Einbrenntemperaturen ist bei den bekannten Dispersionsstabilisatoren damit zu rechnen, daß diese nicht vollständig entfernt werden und daß nach dem Einbrennen Verfärbungen zurückbleiben.

Diese Nachteile werden erfindungsgemäß vermieden durch eine konzentrierte, wäßrige, kolloidale Dispersion eines Tetrafluorethylen-Polymeren mit einem Polymerfeststoffgehalt von 25 bis 70 Gew.-%, bezogen auf das Gesamtgewicht der wäßrigen Dispersion, und mit einem Gehalt an Dispersionsstabilisator, die dadurch gekennzeichnet ist, daß sie 0,5 bis 15 Gew.-%, bezogen auf Polymerfeststoff, eines Aminoxids der Formel 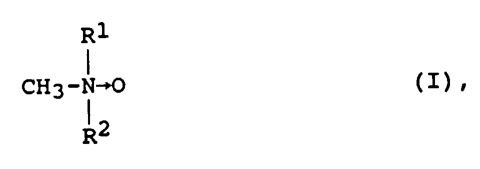 worin R¹ ein Alkylrest von 6 bis 22 C-Atomen oder ein Gemisch solcher Alkylreste und R² ein Alkylrest von 1 bis 22 C-Atomen oder ein Gemisch solcher Alkylreste ist und wobei R¹ und R² gleich oder verschieden und 50 bis 0 Gew.-% der Alkylreste R¹ und R² durch Alkenylreste mit 6 bis 22 C-Atomen und mit 1 bis 3 C=C-Doppelbindungen ersetzt sein können, enthält.

Die in den erfindungsgemäßen konzentrierten, wäßrigen, kolloidalen Tetrafluorethylen-Polymerdispersionen enthaltenen Aminoxide der Formel 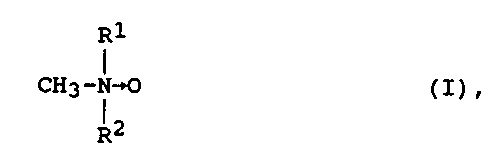 sind bevorzugt Gemische enthaltend Alkylreste R¹ im Bereich von 6 bis 22 C-Atomen. In besonders bevorzugter Weise weisen solche Gemische Alkylreste mit 6 bis 14 C-Atomen in einem Anteil von 65 bis 100 Gew.-% und Alkylreste mit 15 bis 22 C-Atomen in einem Anteil von 0 bis 35 Gew.-% auf, jeweils bezogen auf die Gesamtgewichtsmenge an Aminoxid. Dabei enthalten die Aminoxide vorzugsweise als Reste R² ein Gemisch von Alkylresten im Bereich von 1 bis 22 C-Atomen. In einer weiteren besonders bevorzugten Variante der Erfindung ist R² ein CH₃-Rest. Es können auch 50 bis 0 Gew.-%, vorzugsweise 30 bis 0 Gew.-%, der Alkylreste R¹ und R² durch Alkenylreste mit 6 bis 22 C-Atomen, vorzugsweise 10 bis 22 C-Atomen, und mit 1 bis 3 C=C-Doppelbindungen ersetzt sein.

Die Aminoxide der Formel I sind in den konzentrierten, wäßrigen, kolloidalen Dispersionen gemäß der Erfindung in einer Konzentration von vorzugsweise 1 bis 10 Gew.-%, insbesondere 1 bis 7 Gew.-%, bezogen auf Polymerfeststoff, als Dispersionsstabilisatoren enthalten.

Die in den erfindungsgemäßen Dispersionen enthaltenen Aminoxide der Formel I sind an sich bekannte oberflächenaktive Substanzen. Sie werden üblicherweise durch Oxidation der entsprechenden tertiären Amine mit wäßrigen Wasserstoffperoxid-Lösungen hergestellt, wie beschrieben in den US-Patentschriften 3 215 741 oder 3 283 007 oder der EP-A-229 340.

Die in den erfindungsgemäßen Dispersionen enthaltenen Tetrafluorethylen-(TFE)-Polymeren können sowohl solche sein, die nicht aus der Schmelze verarbeitbar sind als auch solche, die nach üblichen Formgebungsverfahren für Thermoplaste aus der Schmelze verformt werden können. Die erstgenannte Gruppe von TFE-Polymeren - unter dem Begriff "nicht aus der Schmelze verarbeitbar" zusammengefaßt - umfaßt in erster Linie das Homopolymere, nämlich das Polytetrafluorethylen selbst, daneben aber auch die sogenannten "modifizierten" Tetrafluorethylen-Polymeren, das heißt solche Polymerisate des Tetrafluorethylens, die ein fluoriertes oder bevorzugt perfluoriertes Comonomeres in einer so geringen Menge - meist < 1 Gew.-% gemäß ASTM D 1457 oder D 4895 - enthalten, so daß der Charakter des Polymeren als "nicht aus der Schmelze verarbeitbar" erhalten bleibt. Solche modifizierende Comonomere sind beispielsweise Chlortrifluorethylen, Hexafluorisobutylen, 1-Perfluorbuten, Perfluor(alkylvinyl)-ether mit einem Perfluoralkylrest von 1 bis 5 C-Atomen, vorzugsweise Perfluor(propylvinyl)-ether und Hexafluorpropylen. Solche Tetrafluorethylen-Polymere weisen eine scheinbare Schmelzviskosität von mindestens 1 · 10⁸ Pa s bei 380 °C auf, gemessen nach dem Kriechtest [Ajroldi et al., J. Appl. Polym. Sci., 14 (1970), Seite 79 ff.].

Die in den erfindungsgemäßen Dispersionen enthaltenen TFE-Polymeren können aber auch solche Copolymeren des TFE sein, die wegen ihres höheren Gehalts an Comonomeren eine niedrigere Schmelzviskosität aufweisen - meist kleiner als 1 · 10⁶ Pa s - und aus der Schmelze verformt werden können. Solche Copolymere sind insbesondere die des TFE mit [im folgenden werden als Abkürzungen gebraucht:
CTFE = Chlortrifluorethylen, HFP = Hexafluorpropylen, PAVE = Perfluor(alkylvinyl)-ether, E = Ethylen, VDF = Vinylidenfluorid, PPVE = Perfluor(propylvinyl)-ether]:
a) HFP oder höheren Perfluorolefinen der Formel CF₂=CF-Rf1, worin Rf1 ein perfluorierter Alkylrest mit 1 bis 10 Kohlenstoffatomen in gerader oder verzweigter Kette ist;
b) PAVE oder Perfluor(alkylvinyl)-polyether der Formeln CF₂=CF-O-Rf2 und CF₂=CF-O[CF₂CF(CF₃)O]ₙ-Rf2, worin Rf2 ein perfluorierter Alkylrest mit 1 bis 5 C-Atomen in gerader oder verzweigter Kette und n = 1 bis 5 ist, bevorzugt PPVE;
c) HFP und PAVE, insbesondere HFP und PPVE;
d) E, wobei solche Copolymere bevorzugt mindestens ein weiteres copolymerisierbares Monomeres enthalten, häufig auch deren zwei oder mehr. Solche Comonomere sind vorzugsweise ausgewählt aus der Gruppe der perfluorierten Olefine, wobei HFP bevorzugt ist; aus der Gruppe der PAVE oder -polyether der oben angegebenen Formeln, wobei PPVE bevorzugt ist; aus der Gruppe der fluorhaltigen Olefine, bevorzugt 3,3,3-Trifluor-2-trifluormethylpropylen; aus der Gruppe der Vinylester wie beispielsweise Vinylbutyrat, sowie aus der Gruppe VDF und CTFE; solche Copolymere vom Typ TFE/E, gegebenenfalls mit weiteren Monomeren, bestehen aus höchstens 60 Mol-% TFE, 60 bis 40 Mol-% Ethylen und 0 bis 10 Mol-% des Anteils an den genannten dritten und gegebenenfalls vierten Monomeren;
e) VDF, wobei solche Copolymere vorzugsweise - außer TFE und VDF - noch mindestens ein weiteres ethylenisch ungesättigtes, vorzugsweise fluorhaltiges Comonomeres enthalten; insbesondere kommen dafür HFP oder PAVE in Betracht, gegebenenfalls auch Kombinationen von beiden; in diesen thermoplastischen Copolymeren ist das TFE in Anteilen von 40 bis 80 Mol-%, im Falle der Ter- und Quaterpolymeren von 40 bis 65 Mol-%, das VDF in Anteilen von mehr als 20 Mol-% enthalten; eine bevorzugte Kombination ist TFE/VDF/HFP;
f) CTFE, wobei sowohl TFE als auch CTFE der überwiegende Bestandteil sein kann.

Schließlich kommen als TFE-Polymere für die erfindungsgemäßen Dispersionen auch niedermolekulare PTFE in Betracht, wie sie durch Telomerisation von TFE in Gegenwart von zum Beispiel Methylenchlorid oder anderen Telogenen sowie eines oberflächenaktiven Mittels in wäßriger Phase als kolloidale wäßrige Dispersionen erhältlich sind, wie beschrieben in der US-A 3 956 000.

Alle diese Tetrafluorethylen-Polymeren - PTFE, modifiziertes PTFE und TFE-Copolymere - lassen sich als wäßrige, kolloidale Dispersionen in wohlbekannter Weise gewinnen nach einem Verfahren, das in seinen Grundzügen bereits aus der US-A 2 559 752 bekannt ist. Dabei enthält das wäßrige Polymerisationsmedium oberflächenaktive Mittel, insbesondere Perfluorcarbonsäuren, in einer Menge, die ausreicht, das entstehende Polymere in kolloidaler Verteilung zu halten und eine vorzeitige Koagulation zu verhindern. Jedoch sind stabile kolloidale Dispersionen mit einer Teilchengröße von 0,01 bis 0,5 µm direkt aus der Polymerisation oder Copolymerisation zu TFE-Polymeren ohne übermäßige Koagulatbildung nur mit einem Polymerfeststoffgehalt von höchstens 30 Gew.-%, meist sogar nur von bis zu 25 Gew.-% oder weniger erhältlich. Daher müssen derartige Dispersionen, wenn sie für Beschichtungs- oder Imprägnierungszwecke verwendet werden sollen, einem Aufkonzentrierungsprozeß auf einen Polymerfeststoffgehalt von 25 bis 70 Gew.-% unterworfen werden, wobei die Zugabe eines Dispersionsstabilisators zwingend erforderlich ist, um eine Koagulation während des Aufkonzentrierungsvorgangs zu vermeiden. Dabei verbleiben diese Dispersionsstabilisatoren zur Gewährleistung von Transport- und Lagerstabilität in der Dispersion.

Um die Nachteile der bekannten Dispersionsstabilisatoren zu vermeiden, wird erfindungsgemäß ein Aminoxid der obengenannten Formel I oder Gemische solcher Aminoxide mit den oben angegebenen Definitionen der Reste R¹ und R² eingesetzt. Der Aufkonzentrierungsprozeß kann nach einem der eingangs beschriebenen Verfahren durchgeführt werden.

Dabei wird das Aminoxid vor oder bei Beginn des Aufkonzentrierungsvorgangs zugegeben, und zwar vorzugsweise die Gesamtmenge, die zur Stabilisierung beim Aufkonzentrieren der Polymerdispersion, beim Transport, Lagern und späteren Einsatz erforderlich ist. Es ist jedoch auch möglich, zunächst nur einen Teil der erforderlichen Menge zuzugeben und den Rest portionsweise oder in einer Charge in den Aufkonzentrierungsprozeß nachzuschleusen, vorzugsweise gegen dessen Ende. Die zuzugebende Menge bemißt sich nach dem angestrebten - niedrigeren - Endgehalt in der Dispersion und nach dem benutzten Aufkonzentrierungsverfahren. Die Verringerung der Konzentration an Dispersionsstabilisator ist beispielsweise beim Aufkonzentrieren durch Eindampfen sehr gering, bei der bevorzugten Ultrafiltration etwas größer, wobei aber jeweils der abgetrennte Anteil zurückgewonnen werden kann.

Die einzusetzende Gesamtmenge an Dispersionsstabilisator kann durch einen Vorversuch leicht ermittelt werden. Auch kann man gegen Ende oder auch nach Beendigung des Aufkonzentrierungsprozesses die noch vorhandene Menge in bezug auf den vorhandenen Polymerfeststoff bestimmen und ein eventuelles Defizit durch Zugabe eines entsprechenden Anteils ausgleichen.

Den aufkonzentrierten, wäßrigen, kolloidalen Dispersionen gemäß der Erfindung können weitere Zusätze beigegeben werden.

So können die Dispersionen durch Zugabe von Ammoniak oder von anderen basischen oder sauren Mitteln auf einen alkalischen oder sauren pH-Wert eingestellt werden. Für bestimmte Einsatzzwecke können übliche Füllstoffe und Pigmente zugegeben werden wie beispielsweise Ruß, Graphit, Kohlepulver, Glimmer, Talkum, Glas in Form von Pulver, Fasern, Kugeln oder Hohlkugeln, Siliciumdioxid, zum Beispiel in Form von Quarz, Silikate, Metalloxide und -doppeloxide wie Eisenoxid, Kobaltoxid, Chromoxid, Aluminiumoxid, Titanoxid, Antimontrioxid, Bleioxid, Kobaltblau, Ultramarin, organische Pigmente wie Benzidin- oder oder Phthalocyaninfarbmittel, salzartige Stoffe wie Kalium- oder Bariumtitanat, ferner auch Metalle in Form von Flocken, Schuppen oder Pulvern wie Bronze, Kupfer, Aluminium oder Messing sowie Synthesefasern aus hochtemperaturbeständigen Kunststoffen wie zum Beispiel Polyimid- oder Aramidfasern.

Die erfindungsgemäßen Dispersionen können auch Gleitmittel enthalten wie Graphit, Molybdänsulfid, Fluorcarbonöle, Siliconöle, Paraffinöle, Calcium- oder Bleistearat, ferner übliche Verdickungsmittel oder Viskositätsregler wie Homo- und Copolymere von Acrylaten oder Methacrylaten oder Methylcellulose.

Wenn die erfindungsgemäßen Dispersionen Anwendungen zugeführt werden, die ein Einbrennen beziehungsweise Sintern der TFE-Polymeren erfordern, so können auch andere filmbildende und hochtemperaturbeständige Harze beigemischt werden wie Polyimide, Polyamidimide, Polyethersulfone, Polyarylensulfide, Polyetherketone, Polyetherimide, Polysiloxane oder Triketoimidazolidinpolymere oder Gemische derselben.

Die erfindungsgemäß mit dem Aminoxid der Formel I stabilisierten Dispersionen finden Verwendung beim Imprägnieren und Tränken von Fasern sowie von Garnen und Mischgarnen, insbesondere von Garnen, die als Packungen für Dichtungszwecke eingesetzt werden, aus natürlichen Fasern wie Baumwolle, aus Synthesefasern wie Zellwolle, Polyester-, Polypropylen-, Polyamid-, Aramid- oder Polyacrylfasern, aus Fasern von Graphit, Kohlenstoff, Glas und anderen natürlichen und synthetischen Stoffen.

Derartige Imprägnierungen werden üblicherweise nicht oberhalb des Schmelzpunktes des Substrates eingebrannt oder gesintert, sondern nur bei erhöhten Temperaturen getrocknet. Diese Beschränkung ist zwingend erforderlich, wenn das imprägnierte Substrat sehr hohe Temperaturen nicht verträgt. Im allgemeinen sind dazu Trockentemperaturen von bis zu 150 °C notwendig und möglich. Bei diesem Trockenvorgang werden die erfindungsgemäß eingesetzten Dispersionsstabilisatoren völlig oder fast völlig aus dem Überzug entfernt. Dies ist ein überraschender Vorteil, denn bisher übliche Dispersionsstabilisatoren wie oxalkylierte Alkylphenole oder Alkalilaurylsulfate verbleiben bei solcher Trocknung im TFE-Polymer-Überzug.

Somit werden Nachteile vermieden, wie der Übergang des Dispersionsstabilisators in flüssige Medien, wenn Dichtungspackungen in Kontakt mit solchen Flüssigkeiten stehen, oder wie auch physiologische Gefahren, die beim Kontakt mit Lebensmitteln entstehen, und wie auch "Ausschwitzungen" und Anreicherungen des Dispersionsstabilisators an der Oberfläche, die Anschmutzungen unvermeidlich nach sich ziehen.

Die erfindungsgemäßen Dispersionen finden auch Verwendung für die Imprägnierung oder Beschichtung von Flächengebilden, so textilen Flächengebilden wie Vliesen, Nadelfilzen oder Geweben aus den obengenannten Textilmaterialien, aber auch von harten Oberflächen wie beispielsweise Metallen, porösen und glatten keramischen Flächen oder Glas. Soweit solche Substrate bei höheren Temperaturen beständig sind, können die Überzüge bei solchen höheren Temperaturen auch eingebrannt oder gesintert werden. Dabei werden gleichfalls Nachteile vermieden, die bei Dispersionen mit bisher üblichen Dispersionsstabilisatoren auftreten. Es werden keine Verfärbungen in den gesinterten Überzügen beobachtet und die Dispersionsstabilisatoren werden auch bei kurzen Sinterzeiten vollständig entfernt.

Selbstverständlich können die erfindungsgemäßen Dispersionsstabilisatoren auch für die Stabilisierung von Fluorpolymerdispersionen mit einem Polymerfeststoffgehalt von weniger als 25 Gew.-% eingesetzt werden, wenn dies aus bestimmten Gründen, zum Beispiel bei erhöhter Scherbeanspruchung, erforderlich ist.

Die Erfindung wird durch folgende Beispiele noch näher erläutert.

### Beispiel 1

60 kg einer 20gew.%igen kolloidalen, wäßrigen Dispersion eines modifizierten Tetrafluorethylen-Polymeren, das 0,03 Mol-% HFP enthält, werden mit 2,4 kg einer 30gew.%igen Lösung eines Aminoxids der Formel I [R¹ = 2 % C₁₀H₂₁, 55 % C₁₂H₂₅, 22 % C₁₄H₂₉, 10 % C₁₆H₃₃, 2 % C₁₈H₃₇, 7 % C₁₈H₃₅ (einfach ungesättigt), 2 % C₁₈H₃₃ (zweifach ungesättigt); R² = CH₃] versetzt. Die Dispersion wird in einer Ultrafiltrationsanlage mittels Schlauchmembranen des Typs ®Nadir auf 60 Gew.-% Polymergehalt aufkonzentriert. Beim Erreichen eines Polymerfeststoffgehalts von 58 Gew.-% werden weitere 0,8 kg der obengenannten Aminoxidlösung zugesetzt. Die aufkonzentrierte, kolloidale, wäßrige Dispersion enthält keinerlei Koagulat und besitzt einen Gehalt von 60 Gew.-% an modifiziertem PTFE und einen Gehalt von 3,3 Gew.-% an dem genannten Aminoxid, bezogen auf Polymerfeststoff. Diese Dispersion wird zur Tränkung von Aramidgarn (®Kevlar-Regeneratfaser) verwendet. Titer des Flechtgarns: 1000 tex x 1.

Auf einer Flechtmaschine der Firma Herzog Maschinenfabrik, Oldenburg, ist eine zweidiagonale Packung geflochten worden. Die geflochtene Packung besteht aus insgesamt 30 Fäden, die eine quadratische Packung mit einer Kantenlänge von 8 mm bilden (8 x 2 Stück Klöppelfäden, 4 x 2 Stück Eckfäden, 6 x 1 Stück Mittelfäden). Abzugsgeschwindigkeit der Packung: 1,8 m/min.

Beim Flechtvorgang wird zuerst jeder Faden in der Dispersion getränkt und anschließend zur Packung verflochten. Nach dem Flechten wird die Packung 2 Stunden bei 150 °C getrocknet. Die Leerpackung wiegt 33 g/m, die mit der Polymerdispersion imprägnierte Aramidpackung 73 g/m (Auftragsmenge 40 g/m, jeweils bezogen auf einen Querschnitt von 8 x 8 mm). Bei der genannten Trocknungstemperatur ist der Dispersionsstabilisator aus der Imprägnierung praktisch vollständig entwichen. Dies ist daran ersichtlich, daß beim Erhitzen (kurzzeitig bis 350 °C) kein weiterer Gewichtsverlust eintritt. Die imprägnierte Packung weist eine glatte Oberfläche auf, die sich von der einer herkömmlichen PTFE/Aramidfaserpackung nicht merklich unterscheidet. Die Farbe der Imprägnierung ist rein weiß.

### Beispiel 2

Es werden die gleichen Mengen der gleichen Dispersion wie in Beispiel 1 eingesetzt und in gleicher Weise wie in Beispiel 1 der Aufkonzentrierung durch Ultrafiltration unterworfen, jedoch mit der Abweichung, daß 2,4 kg einer 30gew.%igen Lösung eines Aminoxids der Formel I (R¹ = 2 % C₁₀H₂₁, 51 % C₁₂H₂₅, 21 % C₁₄H₂₉, 13 % C₁₆H₃₃, 13 % C₁₈H₃₇; R² = CH₃) zugegeben werden. Beim Erreichen eines Polymerfeststoffgehaltes von 56 Gew.-% werden 0,8 kg der vorgenannten Aminoxidlösung nachgegeben. Dabei wird eine 58gew.%ige Polymerdispersion mit einem Aminoxidgehalt von 4,3 Gew.-%, bezogen auf Polymerfeststoff, erhalten.

Es wird eine Aramid-Packung mit dieser Dispersion getränkt, wie es in Beispiel 1 beschrieben ist. Das Gesamtgewicht der imprägnierten Packung beträgt 67 g/m, das heißt, die Polymer-Auftragsmenge liegt bei 34 g/m. Die Farbe der Imprägnierung ist rein weiß, die Oberfläche der ausgerüsteten Packung glatt und antiadhäsiv. Sie enthält praktisch keinen Dispersionsstabilisator mehr. Beim Erhitzen (kurzzeitig bis 350 °C) tritt kein Gewichtsverlust ein.

### Beispiel 3

60 kg einer 20gew.%igen kolloidalen, wäßrigen Dispersion eines Copolymeren, bestehend aus 50 Mol-% TFE, 48 Mol-% E und 2 Mol-% HFP, werden mit 2,4 kg einer 30gew.%igen Lösung eines Aminoxids der Formel I (R¹ = 2 % C₁₀H₂₁, 51 % C₁₂H₂₅, 21 % C₁₄H₂₉, 13 % C₁₆H₃₃, 13 % C₁₈H₃₇; R² = CH₃) versetzt. Die Dispersion wird an einer Ultrafiltrationsanlage, wie in Beispiel 1 beschrieben, aufkonzentriert. Dabei werden 0,8 kg des genannten Aminoxids bei Erreichen von 46 Gew.-% Polymerfeststoffgehalt nachgegeben. Es resultiert eine Dispersion mit 5,9 Gew.-% Aminoxidgehalt, bezogen auf Polymerfeststoff, und 47 Gew.-% Polymerfeststoffgehalt. Diese Dispersion zeichnet sich durch ein gutes Absetzverhalten und hervorragende Scherstabilität aus. Der pH-Wert liegt bei 6,2.

Als Substrat zur Imprägnierung wurde ein Aramid-Nadelfilz (®Nomex) mit einem Leergewicht von circa 400 g/m² herangezogen. Der Nadelfilz wird mit Hilfe einer Luftspritzpistole (1 mm Düse) einseitig auf der glatten Nadelfilzseite mit der genannten Dispersion besprüht und anschließend 15 Minuten bei 280 °C getrocknet. In einem nachträglichen Arbeitsschritt wird die ausgerüstete Nadelfilzseite mit einem Doppelwalzwerk bei 280 °C kurzzeitig geglättet. Die Auftragsmenge an TFE/E/HFP-Copolymer wird dabei variiert mit 6, 18 beziehungsweise 86 g/m².

Bei einer Auftragsmenge von ≥ 18 g/m² geht der textile Griff verloren. Mit zunehmendem Auftrag wird der Nadelfilz glatter und glänzender. Der erzeugte Überzug ist gut verschmolzen. Diese Ausrüstung weist praktisch keinen Dispersionsstabilisator mehr auf, wie sich bei weiterem Erhitzen bis auf 350 °C ohne Gewichtsverlust zeigt.

### Beispiel 4

50 kg einer 24gew.%igen Dispersion eines PTFE-Mikropulvers, hergestellt nach dem Verfahren gemäß US-A 3 956 000, werden mit 2,4 kg einer 30gew.%igen Aminoxidlösung der Formel I (R¹ = 2 % C₁₀H₂₁, 51 % C₁₂H₂₅, 21 % C₁₄H₂₉, 13 % C₁₆H₃₃, 13 % C₁₈H₃₇; R² = CH₃) versetzt und, wie in Beispiel 1 beschrieben, durch Ultrafiltration aufkonzentriert. 1,2 kg der gleichen Aminoxidlösung werden bei einem PTFE-Gehalt von 55 Gew.-% nachgegeben. Es wird eine konzentrierte Dispersion mit 4,9 Gew.-% Aminoxidgehalt, bezogen auf Polymerfeststoff, und 57 Gew.-% PTFE-Gehalt erhalten. Die Dispersion besitzt einen pH-Wert von 7,8 und ein gutes Absetzverhalten und eine im Vergleich zu den herkömmlich stabilisierten PTFE-Dispersionen verbesserte Scherstabilität. Als Substrat für die Imprägnierung mit dieser Dispersion dienen wiederum der ®Nomex-Nadelfilz aus Beispiel 3 und ein Polyester-Nadelfilz mit einem Leergewicht von 470 g/m².

Beide Filzproben wurden mit der Spritzpistole einseitig besprüht und anschließend 15 Minuten bei 200 °C getrocknet. Nachträglich erfolgte wiederum ein oberflächliches Glätten auf einem mit 200 °C beheiztem Doppelwalzwerk. Die Auftragsmenge an PTFE auf Polyester beträgt 68 g/m². Die Oberfläche ist außerordentlich glatt und antiadhäsiv. Es treten keine Verfärbungen auf; der imprägnierte Nadelfilz ist rein weiß. Die Auftragsmenge auf dem ®Nomex-Nadelfilz beträgt 13 beziehungsweise 36 g/m². Mit zunehmender Auftragsmenge nehmen die Oberflächenglätte und Antihafteigenschaften zu. Der Auftrag enthält keinen Dispersionsstabilisator mehr, was im Falle des ®Nomex-Nadelfilzes durch kurzzeitiges Erhitzen auf 350 °C ohne Gewichtsverlust erkennbar ist (an Polyester kann diese Prüfung nicht erfolgen).

### Beispiel 5

4,2 kg einer 20gew.%igen Dispersion eines modifizierten Tetrafluorethylen-Polymeren, enthaltend 0,03 Mol-% HFP, werden mit 90 g einer 60gew.%igen Aminoxidlösung versetzt, die aus einer Mischung zweier Aminoxide der Formel I besteht:
A) R¹ = 1 % C₆H₁₃, 35 % C₈H₁₇, 54 % C₁₀H₂₁, 10 % c₁₂H₂₅; R² = CH₃ und
B) R¹ = R² = 2 % C₈H₁₇, 95 % C₁₀H₂₁, 3 % C₁₂H₂₅ im Molverhältnis A : B = 3 : 1.

Die Dispersion wird in einem Umlaufverdampfer im Vakuum schonend eingedampft und bis zu einem Polymerfeststoffgehalt von 55 Gew.-% aufkonzentriert. Sie enthält danach 3,7 Gew.-% des Aminoxidgemisches, bezogen auf Polymerfeststoff.

### Beispiel 6

55 kg einer 22gew.%igen kolloidalen, wäßrigen PTFE-Dispersion werden mit 2,4 kg einer 30gew.%igen Lösung eines Aminoxids der Formel I (R¹ = 2 % C₁₀H₂₁, 51 % C₁₂H₂₅, 21 % C₁₄H₂₉, 13 % C₁₆H₃₃, 13 % C₁₈H₃₇; R² = CH₃) versetzt und, wie in Beispiel 1 beschrieben, durch Ultrafiltration aufkonzentriert. Beim Erreichen eines PTFE-Gehaltes von 52 Gew.-% werden 1,2 kg der genannten Aminoxidlösung nachgegeben. Erhalten wird eine konzentrierte, wäßrige, kolloidale Dispersion mit 57 Gew.-% PTFE-Gehalt und 3,4 Gew.-% Aminoxidgehalt, bezogen auf Polymerfeststoff.

### Beispiel 7

50 kg einer 24gew.%igen kolloidalen, wäßrigen Dispersion eines Terpolymeren, bestehend aus 97,7 Mol-% TFE, 1,3 Mol-% PPVE und 1,0 Mol-% HFP, werden mit 2,4 kg einer 30gew.%igen Lösung eines Aminoxids der Formel I (R¹ = 2 % C₁₀H₂₁, 51 % C₁₂H₂₅, 21 % C₁₄H₂₉, 13 % C₁₆H₃₃, 13 % C₁₈H₃₇; R² = CH₃) versetzt und, wie in Beispiel 1 beschrieben, durch Ultrafiltration aufkonzentriert. Bei einem Polymerfeststoffgehalt von 53 Gew.-% werden 1,2 kg der Aminoxidlösung nachgegeben. Es wird eine konzentrierte, wäßrige, kolloidale Dispersion mit 56 Gew.-% Polymerfeststoffgehalt und 5,8 Gew.-% Aminoxidgehalt, bezogen auf Polymerfeststoff, erhalten.

### Beispiel 8

Die gleiche Menge der in Beispiel 1 eingesetzten kolloidalen, wäßrigen Dispersion eines mit HFP modifiziertem TFE-Polymeren wird mit 2,3 kg einer 30gew.%igen Lösung eines Aminoxids der Formel I (R¹ = 70 % C₁₂H₂₅, 25 % C₁₄H₂₉, 5 % C₁₆H₃₃; R² = CH₃) versetzt und, wie in Beispiel 1 beschrieben, durch Ultrafiltration aufkonzentriert. Beim Erreichen eines Polymerfeststoffgehaltes von 43 Gew.-% werden 1,0 kg der Aminoxidlösung nachgegeben. Es wird eine konzentrierte, wäßrige, kolloidale Dispersion mit 59 Gew.-% Polymerfeststoffgehalt und 1,9 Gew.-% Aminoxidgehalt, bezogen auf Polymerfeststoff, erhalten.

Mit dieser Dispersion wird gemäß Beispiel 1 eine imprägnierte Aramidgarnpackung hergestellt und getrocknet. Der PTFE-Auftrag beträgt 35 g/m Packung. Die Farbe der Imprägnierung ist weiß, die Oberfläche der imprägnierten Packung ist glatt und antiadhäsiv. Sie enthält praktisch keinen Dispersionsstabilisator mehr, was sich daran zeigt, daß beim Erhitzen (kurzzeitig bis 350 °C) kein weiterer Gewichtsverlust beobachtet wird.

## Patentansprüche

1. Wäßrige, kolloidale Dispersion, enthaltend 25 bis 70 Gew.-%, bezogen auf das Gesamtgewicht der wäßrigen Dispersion, eines Tetrafluorethylen-Polymeren und 0,5 bis 15 Gew.-%, bezogen auf Polymerfeststoff, eines Aminoxids der Formel 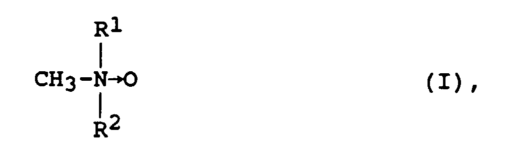 worin R¹ ein Alkylrest von 6 bis 22 C-Atomen oder ein Gemisch solcher Alkylreste und R² ein Alkylrest von 1 bis 22 C-Atomen oder ein Gemisch solcher Alkylreste ist und wobei 50 bis 0 Gew.-% der Alkylreste R¹ und R² durch Alkenylreste mit 6 bis 22 C-Atomen und mit 1 bis 3 C=C-Doppelbindungen ersetzt sein können.

2. Dispersion gemäß Anspruch 1, dadurch gekennzeichnet, daß in dem Aminoxid der Formel I der Rest R¹ ein Gemisch von 65 bis 100 Gew.-% an Alkylresten mit 6 bis 14 C-Atomen und von 35 bis 0 Gew.-% an Alkylresten mit 15 bis 22 C-Atomen ist und/oder R² = CH₃ ist.

3. Dispersion gemäß Anspruch 1 oder 2, dadurch gekennzeichnet, daß der Gehalt an Aminoxid 1 bis 10 % beträgt.

4. Dispersion gemäß einem oder mehreren der Ansprüche 1 bis 3, dadurch gekennzeichnet, daß das Tetrafluorethylen-Polymere das Homopolymer Polytetrafluorethylen ist.

5. Dispersion gemäß einem oder mehreren der Ansprüche 1 bis 3, dadurch gekennzeichnet, daß das Tetrafluorethylen-Polymere ein nicht-schmelzverarbeitbares Polytetrafluorethylen ist, das bis zu 0,5 Mol-% eines modifizierenden Monomeren enthält.

6. Dispersion gemäß einem oder mehreren der Ansprüche 1 bis 3, dadurch gekennzeichnet, daß das Tetrafluorethylen-Polymere ein aus der Schmelze verarbeitbares Copolymeres des Tetrafluorethylens ist.

7. Dispersion gemäß Anspruch 6, dadurch gekennzeichnet, daß das aus der Schmelze verarbeitbare Copolymere des Tetrafluorethylens daneben mindestens ein Copolymeres aus der Gruppe Hexafluorpropylen, Chlortrifluorethylen, Vinylidenfluorid, Perfluor(propylvinyl)-ether und Ethylen enthält.

8. Dispersion gemäß Anspruch 1 bis 3, dadurch gekennzeichnet, daß das Tetrafluorethylen-Polymere ein niedermolekulares Polytetrafluorethylen ist, das durch Umsetzung von Tetrafluorethylen mit einer telogen aktiven Verbindung nach dem Verfahren der Dispersionspolymerisation als wäßrige, kolloidale Dispersion erhalten worden ist.

9. Verfahren zur Herstellung einer konzentrierten, kolloidalen, wäßrigen Dispersion eines Tetrafluorethylen-Polymeren, dadurch gekennzeichnet, daß einer wäßrige, kolloidale Dispersion des gleichen Polymeren mit geringerem Polymerfeststoffgehalt als Dispersionsstabilisator ein Aminoxid der Formel 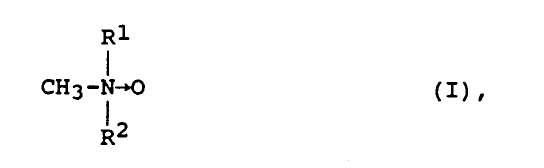 worin R¹ ein Alkylrest von 6 bis 22 C-Atomen oder ein Gemisch solcher Alkylreste und R² ein Alkylrest von 1 bis 22 C-Atomen oder ein Gemisch solcher Alkylreste ist und 50 bis 0 Gew.-% der Alkylreste R¹ und R² durch Alkenylreste mit 6 bis 22 C-Atomen und mit 1 bis 3 C=C-Doppelbindungen ersetzt sein können, zugegeben wird und die Dispersion auf einen Polymerfeststoffgehalt von 25 bis 70 Gew.-% aufkonzentriert wird.

10. Verwendung der Dispersionen gemäß einem oder mehreren der Ansprüche 1 bis 8 zum Imprägnieren von Garnen oder von textilen Flächengebilden aus natürlichen oder synthetischen Fasern.

## Claims

1. A concentrated, aqueous, colloidal dispersion, comprising 25 to 70% by weight, based on the total weight of the aqueous dispersion, of a tetrafluoroethylene polymer and 0.5 to 15% by weight, based on the polymer solid, of an amine oxide of the formula 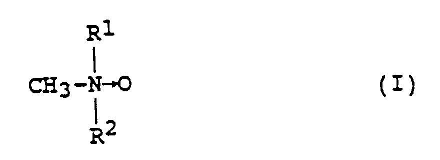 in which R¹ is an alkyl radical having 6 to 22 carbon atoms or a mixture of such alkyl radicals and R² is an alkyl radical having 1 to 22 carbon atoms or a mixture of such alkyl radicals, and in which 50 to 0% by weight of the alkyl radicals R¹ and R² can be replaced by alkenyl radicals having 6 to 22 carbon atoms and having 1 to 3 C=C double bonds.

2. A dispersion as claimed in claim 1, wherein, in the amine oxide of the formula I, the radical R¹ is a mixture of 65 to 100% by weight of alkyl radicals having 6 to 14 carbon atoms and of 35 to 0% by weight of alkyl radicals having 15 to 22 carbon atoms and/or R² is CH₃.

3. A dispersion as claimed in claim 1 or 2, wherein the content of amine oxide is 1 to 10%.

4. A dispersion as claimed in one or more of claims 1 to 3, wherein the tetrafluoroethylene polymer is the homopolymer polytetrafluoroethylene.

5. A dispersion as claimed in one or more of claims 1 to 3, wherein the tetrafluoroethylene polymer is a polytetrafluoroethylene which cannot be processed in the melt and comprises up to 0.5 mol % of a modifying monomer.

6. A dispersion as claimed in one or more of claims 1 to 3, wherein the tetrafluoroethylene polymer is a tetrafluoroethylene copolymer which can be processed from the melt.

7. A dispersion as claimed in claim 6, wherein the tetrafluoroethylene copolymer which can be processed from the melt also comprises at least one copolymer from the group comprising hexafluoropropylene, chlorotrifluoroethylene, vinylidene fluoride, perfluoro(propylvinyl) ether and ethylene.

8. A dispersion as claimed in claims 1 to 3, wherein the tetrafluoroethylene polymer is a low molecular weight polytetrafluoroethylene which has been obtained as an aqueous, colloidal dispersion by reaction of tetrafluoroethylene with a compound having a telogenic action by the process of dispersion polymerization.

9. A process for the preparation of a concentrated, colloidal, aqueous dispersion of a tetrafluoroethylene polymer, which comprises adding an amine oxide of the formula 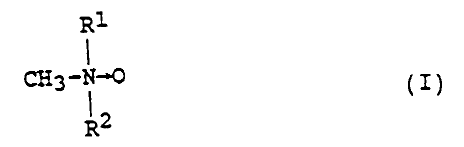 in which R¹ is an alkyl radical having 6 to 22 carbon atoms or a mixture of such alkyl radicals and R² is an alkyl radical having 1 to 22 carbon atoms or a mixture of such alkyl radicals, and 50 to 0% by weight of the alkyl radicals R¹ and R² can be replaced by alkenyl radicals having 6 to 22 carbon atoms and having 1 to 3 C=C double bonds, as the dispersion stabilizer to an aqueous, colloidal dispersion of the same polymer having a lower polymer solids content and concentrating the dispersion to a polymer solids content of 25 to 70% by weight.

10. The use of a dispersion as claimed in one or more of claims 1 to 8 for impregnating yarns or textile sheet-like structures of naturally occurring or synthetic fibers.

## Revendications

1. Dispersion colloïdale, aqueuse contenant 25 à 70 % en poids, par rapport au poids total de la dispersion aqueuse, d'un polymère de tétrafluoroéthylène et 0,5 à 15 % en poids, par rapport à la matière solide du polymère, d'un oxyde d'amine de formule 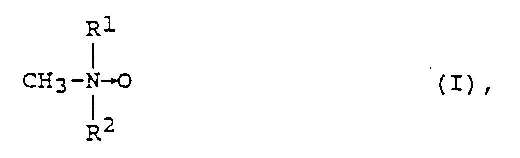 dans laquelle R¹ est un radical alkyle avec 6 à 22 atomes de C ou un mélange de tels radicaux alkyle et R² est un radical alkyle avec 1 à 22 atomes de C ou un mélange de tels radicaux alkyle et où 50 à 0 % en poids des radicaux alkyle R¹ et R² peuvent être remplacés par des radicaux alcényle avec 6 à 22 atomes de C et avec 1 à 3 doubles liaisons C=C.

2. Dispersion selon la revendication 1, caractérisée en ce que dans l'oxyde d'amine de formule I, le radical R¹ est un mélange de 65 à 100 % en poids de radicaux alkyle avec 6 à 14 atomes de C et de 35 à 0 % en poids de radicaux alkyle avec 15 à 22 atomes de C et/ou R² = CH₃.

3. Dispersion selon la revendication 1 ou 2, caractérisée en ce que la teneur en oxyde d'amine est de 1 à 10 %.

4. Dispersion selon une ou plusieurs des revendications 1 à 3, caractérisée en ce que le polymère de tétrafluoroéthylène est le polytétrafluoroéthylène homopolymère.

5. Dispersion selon une ou plusieurs des revendications 1 à 3, caractérisée en ce que le polymère de tétrafluoroéthylène est un polytétrafluoroéthylène non travaillable à l'état fondu qui contient jusqu'à 0,5 mol % d'un monomère modifiant.

6. Dispersion selon une ou plusieurs des revendications 1 à 3, caractérisée en ce que le polymère de tétrafluoroéthylène est un copolymère du tétrafluoroéthylène travaillable à l'état fondu.

7. Dispersion selon la revendication 6, caractérisée en ce que le copolymère du tétrafluoroéthylène travaillable à l'état fondu contient en outre au moins un copolymère du groupe constitué par l'hexafluoropropylène, le chlorotrifluoroéthylène, le fluorure de vinylidène, l'éther perfluoro(propylvinylique) et l'éthylène.

8. Dispersion selon la revendication 1 à 3, caractérisée en ce que le polymère de tétrafluoroéthylène est un polytétrafluoroéthylène de faible masse moléculaire qui a été obtenu sous forme de dispersion colloïdale, aqueuse par réaction du tétrafluoroéthylène avec un composé télogéniquement actif, selon le procédé de polymérisation en dispersion.

9. Procédé de préparation d'une dispersion aqueuse, colloïdale, concentrée d'un polymère de tétrafluoroéthylène, caractérisé en ce qu'on ajoute en tant que stabilisant de dispersion, à une dispersion colloïdale, aqueuse du même polymère ayant une plus faible teneur en matière solide de polymère, un oxyde d'amine de formule 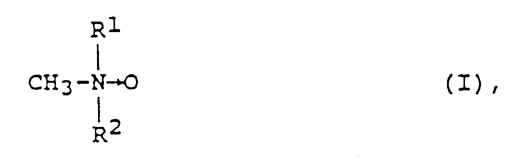 dans laquelle R¹ est un radical alkyle avec 6 à 22 atomes de C ou un mélange de tels radicaux alkyle et R² est un radical alkyle avec 1 à 22 atomes de C ou un mélange de tels radicaux alkyle et 50 à 0 % en poids des radicaux alkyle R¹ et R² peuvent être remplacés par des radicaux alcényle avec 6 à 22 atomes de C et avec 1 à 3 doubles liaisons C=C et en ce qu'on concentre la dispersion à une teneur en matière solide de polymère de 25 à 70 % en poids.

10. Utilisation des dispersions selon une ou plusieurs des revendications 1 à 8 pour imprégner des fils ou des produits textiles en nappe, en fibres naturelles ou synthétiques.
